Europäisches Patentamt

European Patent Office

Office européen des brevets

(11) Publication number: **0 224 991**
**A2**

(12) **EUROPEAN PATENT APPLICATION**

(21) Application number: **86306627.0**

(22) Date of filing: **27.08.86**

(51) Int. Cl.⁴: **G 01 G 21/24**
**G 01 G 21/23**

(30) Priority: **29.08.85 GB 8521532**

(43) Date of publication of application:
**10.06.87 Bulletin 87/24**

(84) Designated Contracting States:
**CH DE FR GB IT LI NL SE**

(71) Applicant: **Skou, Christian**
**25 Highclere**
**Sunninghill Berkshire(GB)**

(71) Applicant: **Hamilton, Neville Reginald**
**22 York Avenue**
**Windsor Berkshire(GB)**

(72) Inventor: **Skou, Christian**
**25 Highclere**
**Sunninghill Berkshire(GB)**

(72) Inventor: **Hamilton, Neville Reginald**
**22 York Avenue**
**Windsor Berkshire(GB)**

(74) Representative: **Smith, Martin Stanley et al,**
**Stevens, Hewlett & Perkins 5, Quality Court Chancery**
**Lane**
**London WC2A 1HZ(GB)**

(54) **Weighing mechanism.**

(57) A weighing mechanism for continuous or batch check-weighing of relatively large and heavy loads has a horizontal weighing platform which is supported with respect to a base by two pairs of pivots with a horizontal link extending between the members of each pair so as to afford a parallelogram motion system.

FIG.1

EP 0 224 991 A2

The invention relates to a weighing mechanism of a kind particularly suitable for check-weighing on a continuous or batch basis.

Check weighers have a platform on which the goods to be weighed are placed for batch-weighing or carried across on a conveyor for continuous weighing. A weigh-cell gives an electrical output in accordance with the weight on the platform. This may be achieved by means of a spring and displacement transducer arrangement or by a force-balance system, for example. For accuracy, the platform should be constrained to move vertically and without tilting. Conventionally, the platform is mounted on a beam arrangement comprising leaf-type flexure mounts.

Such arrangements are accurate and suitable for weights from grams to one or two kilograms. However, there is a requirement for accurate check-weighing of products weighing tens of kilograms. Bags of potatoes and coal are examples. Machines used hitherto have been relatively inaccurate. The principles of the above-mentioned kind of check-weighers can be extended to systems for products of greater weights. However, such products are not only heavier but also bigger, with the consequence that the platform must be extended. Existing arrangments for mounting the platform are inadequate for extended platforms for heavy products. The present invention seeks to provide an improvement.

According to the invention there is provided a weighing mechanism comprising a base frame; a weighing platform structure including a horizontal weighing platform; a linkage system whereby the weighing platform structure is linked to the base frame; and a weigh-cell for giving an output in accordance with the tendency of the platform to move with respect to the frame as a result of the weight of products placed on the platform, the linkage system comprising a first link pivoted at a first pivot axis to the base frame and at a second pivot axis to the platform, the first and second pivot axes lying in a first horizontal plane closely parallel or coplanar with the plane of the platform, and the linkage system further comprising a second link pivoted at a third pivot axis to the base frame and at a fourth pivot axis to the platform structure, the third and fourth pivot axes being spaced apart in a second horizontal plane the same distance as the first and second pivot axes, being vertically spaced from the weighing platform and being horizontally distanced from the first and second pivot axes, the linkage thereby operating in a parallelogram fashion to maintain the platform horizontal.

Preferably the mechanism is essentially box-shaped, the platform structure and the base frame being complementary L-shapes, the first link coupling the arm of the base frame to the leg of the platform structure, namely the platform, and the second link coupling the leg of the base frame to the arm of the platform structure.

The pivots are preferably cross-flexure pivots comprising flexure leaves which cross at the pivot axis.

The weigh cell may be of the force-balance kind or may comprise a tare spring and deflection sensor combination. A fluid damper may be provided to damp the motion of the platform.

The invention will further be described with reference to the accompanying drawings, of which:-

Figure 1 is a schematic elevation of a weighing mechanism in accordance with the invention;

Figure 2 is a perspective view of the mechanism of Figure 1; and

Figure 3 is a diagram of one of the pivots of the mechanism.

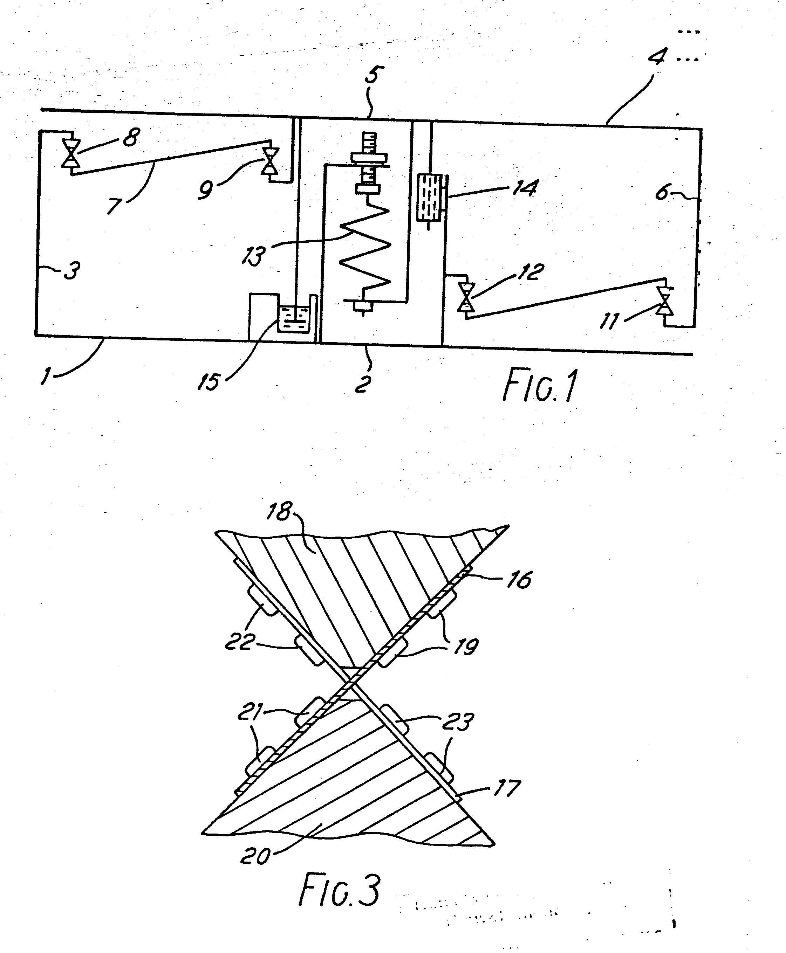

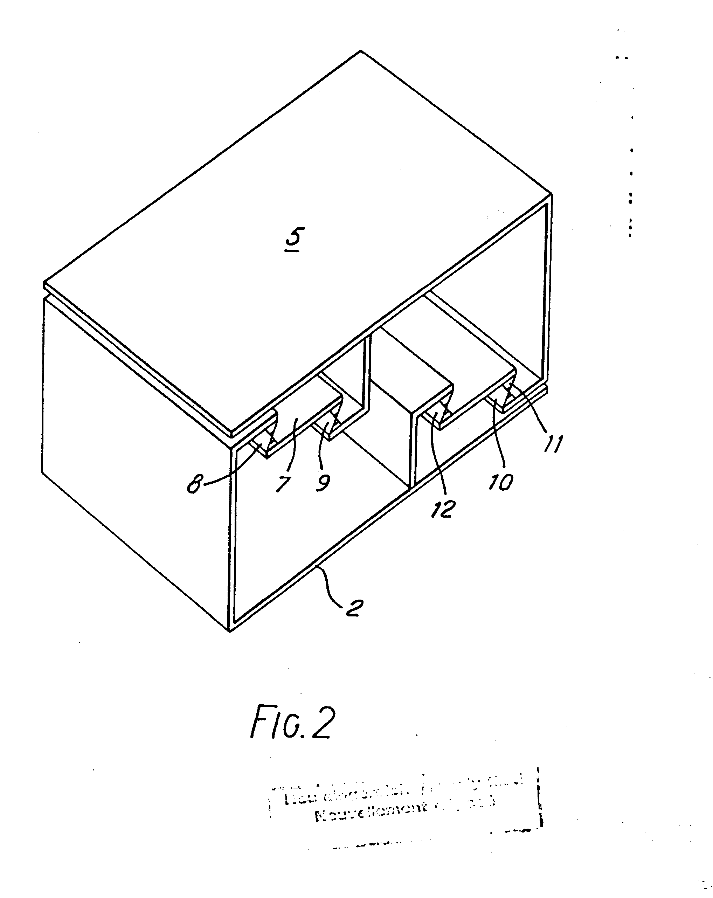

Referring to Figures 1 and 2 the mechanism comprises a base frame 1 which is generally L-shaped with a horizontal base leg 2 and a vertical arm 3. Mounted on the base frame is a platform structure 4 which again is essentially L-shaped, comprising a leg which is a horizontal weighing platform 5 and a vertical arm 6.

A first link 7 is pivoted at 8 to the arm of the base frame and at 9 to the leg of the platform structure. The pivot axes at 8 and 9 are in a horizontal plane just beneath the plane of the platform. A second link 10 is pivoted at 11 to the arm of the platform structure and at 12 to the leg of the base frame. The pivot axes 11 and 12 are spaced apart the same distance as the pivot axes 8 and 9 and, it will be seen, are spaced vertically and horizontally therefrom. The system of links 7 and 10 constitutes a parallelogram linkage which ensures that the platform is constrained to move only vertically when weights are placed on it.

As may be seen from Figure 2, the mechanism has a significant depth perpendicular to the two dimensions shown in the drawing. The pivots 8, 9, 11 and 12 are elongate and extend across the mechanism. Alternatively each pivot may be in two parts at opposite sides of the machine. However, it is important in the latter case that each link 7, 10 should be unitary and not composed of two independent links at opposite sides of the machine. In Figure 2 the links are shown as unitary.

A weigh-cell is provided to give an output in accordance with the weight on the platform. This is situated at the centre of the platform and comprises an adjustable tare spring 13 which supports the platform and an inductive position transducer 14 which detects deflection of the spring in response to weight on the platform. An oil dash-pot 15 is provided to damp the motion of the platform.

Figure 3 shows detail of one of the pivots. It comprises first and second metal flexure leaves 16 and 17 mounted at right-angles to each other to cross at the pivot axis. Leaf 16 is fixed to a platform mount 18 at 19, and to a base frame mount 20 at 21. Leaf 17 is fixed to the platform mount 18 at 22 and to the base frame mount 20 at 23.

CLAIMS

1.      A weighing mechanism comprising a base frame; a weighing platform structure including a horizontal weighing platform;  a linkage system whereby the weighing platform structure is linked to the base frame;  and a weigh-cell for giving an output in accordance with the tendency of the platform to move with respect to the frame as a result of the weight of products placed on the platform, the linkage system comprising a first link pivoted at a first pivot axis to the base frame and at a second pivot axis to the platform, the first and second pivot axes lying in a first horizontal plane closely parallel or coplanar with the plane of the platform, and the linkage system further comprising a second link pivoted at a third pivot axis to the base frame and at a fourth pivot axis to the platform structure, the third and fourth pivot axes being spaced apart in a second horizontal plane the same distance as the first and second pivot axes, being vertically spaced from the weighing platform and being horizontally distanced from the first and second pivot axes, the linkage thereby operating in a parallelogram fashion to maintain the platform horizontal.

2.      A weighing mechanism as claimed in Claim 1 wherein the mechanism is essentially box-shaped, the platform structure and the base frame being complementary L-shapes, the first link coupling the arm of the base frame to the leg of the platform structure, namely the platform, and the second link coupling the leg of the base frame to the arm of the platform structure.

3.      A weighing mechanism as claimed in Claim 1 or Claim 2 wherein the pivots are cross-flexure pivots comprising flexure leaves which cross at the pivot axis.

4.    A weighing mechanism as claimed in any of the preceding claims wherein the weigh cell comprises  a tare spring and deflection sensor combination.    A fluid damper may be provided to damp the motion of the platform.

FIG.1

FIG.3

FIG.2